# EUROPEAN PATENT APPLICATION

(11) **EP 4 575 707 A1**
(43) Date of publication of application: **25.06.2025**
(21) Application number: 24196819.7
(22) Date of filing: 27.08.2024
(51) Int. Cl.: G06E 3/00, G06N 10/60, G06N 3/0464

(54) **PHOTONIC INTEGRATED CIRCUIT FOR OPTICAL COMPUTING AND NEURAL NETWORKS**

(30) Priority: 22.12.2023 US 202363613958 P; 23.07.2024 US 202418781117
(71) Applicant: Taara Connect, Inc., Sunnyvale, CA 94089 (US)
(72) Inventor: Palese, Stephen, Mountain View, 94043 (US)
(74) Representative: Derry, Paul Stefan

(57) **Abstract**

Aspects of the disclosure relate to analyzing an image using an optical neural network (ONN). As an example, a method may include transmitting, by an input photonic integrated circuit (PIC), a signal including a test pattern. The test pattern may represent an image to be analyzed. The method may also include filtering, by one or more convolution PIC layers, the signal including the test pattern. The filtering may be based on a target pattern. The method may also include comparing, by an analyzer PIC, the filtered signal to a threshold.

## Description

### CROSS-REFERENCE TO RELATED APPLICATIONS

The present application claims the benefit of the filing date of U.S. Provisional Application No. 63/613,958, filed December 22, 2023, the entire disclosure of which is incorporated by reference herein.

### BACKGROUND

Image processing, recognition, classification is one of the most computer resource intensive processes that exists with over 750 billion images on the internet and greater than three billion more every day. In order for efficient search, these are processed using neural networks to identify key features such as color, textures, edges, patterns, etc. These features may be fed into systems including deep learning neural networks trained to understand images and subsequently stored in the database and indexed. In this regard, when customers search with the input image, these systems provide the most visually similar images. Processing may require a large computational resource overhead given the large number of images. With the rapidly increasing complexity in data manipulation techniques and dataset size, highly integrated and scalable photonics hardware with ultracompact size and the reduced energy consumption may be needed to avoid the resource bottleneck in artificial neural networks.

### BRIEF SUMMARY

Aspects of the disclosure are directed towards a method of analyzing an image using an optical neural network (ONN). The method comprising transmitting, by an input photonic integrated circuit (PIC), a signal including a test pattern, wherein the test pattern represents an image to be analyzed; filtering, by one or more convolution PIC layers, the signal including the test pattern, wherein the filtering is based on a target pattern; comparing, by an analyzer PIC, the filtered signal to a threshold; and outputting, by the analyzer PIC, results of the comparison.

In one example, the method further includes performing, at a first lens, a Fourier Transform (FT) on the signal including the test pattern from the input PIC; and performing, at a second lens, an inverse Fourier Transform (IFT) on the filtered signal from the one or more convolution PIC layers.

In another example, outputting, by the analyzer PIC, the results of the comparison include saving the results in a memory of the ONN.

In a further example, the method further includes receiving, at the input PIC, the test pattern; and encoding, at the input PIC, the test pattern on the signal. Additionally, encoding, at the input PIC, the test pattern on the signal may include encoding components of the test pattern of the signal.

In an additional example, the method further includes receiving, at one or more convolution PIC layers, the signal including the test pattern; and receiving, at the one or more convolution PIC layers, a signal including the target pattern from a target PIC. Additionally, the receiving, at the one or more convolution PIC layers, the signal including the target pattern may include receiving a signal including a plurality of components of the target pattern, the plurality of components of the target pattern including a first component and a second component; and filtering, by the one or more convolution PIC layers, the signal including the test pattern may include filtering the signal including the test pattern based on the first component at a first layer of the one or more convolution PIC layers and filtering the signal including the test pattern based on the second component at a second layer of the one or more convolution PIC layers. Additionally, filtering the signal including the test pattern based on the first component at the first layer of the one or more convolution PIC layers and filtering the signal including the test pattern based on the second component at the second layer of the one or more convolution PIC layers may be performed in parallel. Additionally or alternatively, filtering the signal including the test pattern based on the first component at the first layer of the one or more convolution PIC layers and filtering the signal including the test pattern based on the second component at the second layer of the one or more convolution PIC layers may be performed sequentially.

In a further example, the threshold is a plurality of thresholds and each of the plurality of thresholds corresponds to a different component of the test pattern.

Another example, the threshold is a confidence level threshold.

In an additional example, the results of the comparison include a determination of a class of the test pattern or recognition of an image in the test pattern.

Another aspect of the disclose is directed towards an optical neural network (ONN) formed as a plurality of layers. The ONN comprising a first layer including an input photonic integrated circuit (PIC), the input PIC configured to transmit signals including one or more test patterns, wherein each test pattern represents an image to be analyzed; a second layer including a first lens, the first lens configured to perform a Fourier Transform (FT) on signals passing therethrough; a third layer including one or more convolution PIC layers, the one or more convolution PIC layers configured to filter received signals including one or more test patterns based on one or more target patterns; a fourth layer including a second lens, the second lens configured to perform inverse Fourier Transform (IFT) on signals passing therethrough; and a fifth layer including an analyzer PIC, the analyzer PIC configured to compare filtered signals from the third layer to one or more thresholds.

In one example, the FT is Fast Fourier Transform (FFT) and the IFT is an inverse Fast Fourier Transform (IFFT).

In another example, the first lens and the second lens are meta-lenses.

In a further example, the first lens and the second lens are stacked interlayered multiple planar diffractive cell layers.

In an additional example, the comparison results in a determination of a class of a test pattern or recognition of an image in the test pattern.

Another aspect of the disclosure is directed towards an optical neural network (ONN) formed as a plurality of layers. The ONN comprising a first layer including an input photonic integrated circuit (PIC), the input PIC configured to transmit signals beam including one or more test patterns, wherein each test pattern represents an image to be analyzed; a second layer including one or more convolution PIC layers, the one or more convolution PIC layers configured to filter received signals including one or more test patterns based on one or more target patterns; and a third layer including an analyzer PIC, the analyzer PIC configured to compare filtered optical beams from the second layer to a threshold.

In one example, a first lens configured to perform a Fourier Transform (FT) on an optical beam passing therethrough is included in one of: i) the first layer, ii) the second layer, or ii) the third layer.

In an additional example, a second lens, the second lens configured to perform inverse Fourier Transform (IFT) on an optical beam passing therethrough is included in one of: i) the first layer, ii) the second layer, or ii) the third layer.

### BRIEF DESCRIPTION OF DRAWINGS

FIGURE 1 is a block diagram in accordance with aspects of the disclosure.
FIGURE 2 is a pictorial diagram in accordance with aspects of the disclosure.
FIGURE 3A is a block diagram in accordance with aspects of the disclosure.
FIGURE 3B is a pictorial diagram in accordance with aspects of the disclosure.
FIGURE 4A is a pictorial diagram in accordance with aspects of the disclosure.
FIGURE 4B is a pictorial diagram in accordance with aspects of the disclosure.
FIGURE 5 is a flow diagram in accordance with aspects of the disclosure.

### DETAILED DESCRIPTION

### Overview

The technology relates to an optical neural network (ONN) implemented using photonic integrated circuits (PIC). The ONN implemented using PICs may be used in image analysis. The ONN may include a plurality of layers. The plurality of layers may include an input PIC, a first lens, one or more convolution PIC layers, a second lens, and an analyzer PIC. In some instances, a target PIC may be included at the one or more convolution layers. In this regard, the plurality of layers of the ONN may be used in image analysis. The plurality of layers may analyze the images via processing when the images are encoded on signals. The signals may be can be light-based signals including, in some instances, optical beams including communications signals. The analysis of images may serve different purposes. As such, in one instance, the ONN may classify images. In another instance, the ONN may recognize images. Additionally, one or more of the plurality of layers may include an optical phased array (OPA). The OPA(s) may be one or two dimensional (2D).

Generally, ONNs implemented with free-space approaches may require complicated structure and components that lack scalability. In this regard, the components therein require large suites of auxiliary equipment which lack the scalability required for useful ONNs.

To address this, as noted above, an ONN may be implemented using PIC based OPA(s). In this regard, the ONN may utilize the scalability of the OPA to compute complex value matrix-vector multiplication, have the advantages of ultra-high bandwidth, high calculation speed, and high parallelism over electronic counterparts. The PIC approach configured with OPAs leverages advances in complementary metal oxide semiconductor (CMOS) fabrication technologies to replace bulk centimeter sized ONN components with integrated micron level semiconductor photonics constructs. These CMOS compatible photonics can be directly integrated with CMOS electronics to provide complete ONN chips akin to electronic central processing unit (CPU) and graphics processing unit (GPU). This also allows ONN chip manufacture at the volume and cost scale required for next generation wide-spread speech recognition, image classification, computer vision and natural language processing applications.

Additionally, extra dimensions enable system improvements such as wavelength division, polarization, and spatial mode multiplexing that provides multi-thread processing with almost no extra computing overhead, leading to ultralow energy consumption that can drive system key performance metrics.

As discussed above, the ONN implemented using PICs, may be used in a method of analyzing an image. The analysis of images may be directed towards different ends. In one instance, the ONN may classify images (e.g. perform image classification tasks). In such an instance, a test pattern may be analyzed to determine the class of images to which it belongs. In other instances, the ONN may recognize certain patterns or other information in images and/or the image itself (e.g., perform image recognition tasks). In such an instance, the results of the analysis may include if the target pattern is contained in the test pattern.

An example method of analyzing an image using an ONN may include transmitting, by an input photonic integrated circuit (PIC), signal including a test pattern, wherein the test pattern represents an image to be analyzed. In this regard, the input PIC may be configured to receive a test pattern. The input PIC may encode the test pattern on a signal and transmit the signal. In some instances, the signal may be transformed into the Fourier Transform domain via a first lens and received by the one or more convolution PIC layers.

The method may further include filtering, by one or more convolution PIC layers, the signal including the test pattern, wherein the filtering is based on a target pattern. The one or more convolution PIC layers may apply a filter or mask based on one or more target patterns encoded on a signal. The one or more target patterns may include example images to be compared to or correlated to the test pattern. In some instances, the one or more target patterns may be in the FT domain. In some instances, the one or more target patterns may include training data. In some instances, the one or more target patterns may be encoded by and received from the target PIC. A filtered signal may be transmitted by the one or more convolution PIC layers through a second lens. The filtered signal may be transformed out of the FT domain and be received by the analyzer PIC.

The method may further include comparing, by an analyzer PIC, the filtered signal to a threshold. In this regard, the analyzer PIC may be configured to compare the filtered signal to one or more thresholds to determine . The results of the comparison may be a correlation matrix. The filtering by the one or more convolution PIC layers 418 may be repeated until the threshold is met. In some instances, the filtering by the one or more convolution PIC layers may be repeated until the threshold is met for the image to be recognized. Additionally or alternatively, the filtering may be repeated for each parameter pertaining to a class of images.

The method may further include outputting, by the analyzer PIC, results of the comparison. In this regard, the analyzer PIC may output the results of the comparison as outputs. The results of the comparison may be in the form of a correlation matrix or include components of correlation matrix.

The features and methodology described herein may provide a scalable ONN capable of processing large amounts of data and perform complex value operations without the limitations of current electronic counterparts. In this regard, the ONN may utilize optical phase and amplitude control and modulation capability provided by the PIC to compute complex value matrix-vector multiplication, have the advantages of ultra-high bandwidth, high calculation speed, high parallelism over electronic counterparts, and ultralow power consumption. The PIC elements of the ONN may employ an optical absolute or relative phase measurement, control and feedback architecture to enable improvements offered by complex value ONN architectures and coherent receiver modalities. Moreover, The PIC approach configured with OPAs leverages advances in complementary metal oxide semiconductor (CMOS) fabrication technologies to replace bulk centimeter sized ONN components with integrated micron level semiconductor photonics constructs. These CMOS compatible photonics can be directly integrated with CMOS electronics to provide complete ONN chips akin to electronic central processing unit (CPU) and graphics processing unit (GPU). This also allows ONN chip manufacture at the volume and cost scale required for next generation wide-spread speech recognition, image classification, computer vision and natural language processing applications. Additionally, extra dimensions enable system improvements such as wavelength division, polarization, and spatial mode multiplexing that provides multi-thread processing with almost no extra computing overhead, leading to ultralow energy consumption that can drive system key performance metrics.

### EXAMPLE SYSTEMS

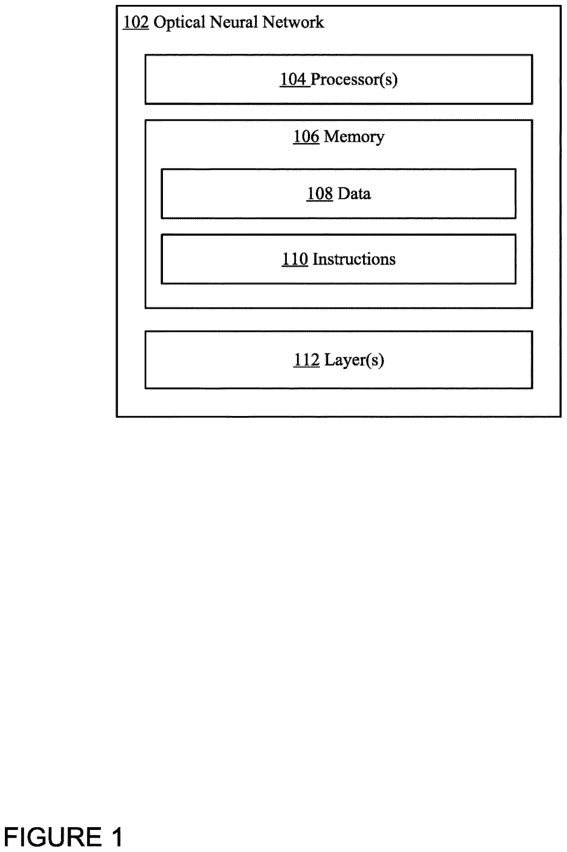

As noted above, an ONN implemented using PICs may include a plurality of layers. FIGURE 1 illustrates an example ONN 102. The example ONN 102 includes one or more processors 104, a memory 106, and a plurality of layers 112. The one or more processors 104 may be any conventional processors, such as commercially available CPUs. For example, one or more processors 360 may be one or more complementary metal-oxide semiconductor (CMOS) processors. Alternatively, the one or more processors 104 may be a dedicated device such as an application specific integrated circuit (ASIC) or another hardware-based processor, such as a field programmable gate array (FPGA). Although FIGURE 1 functionally illustrates the one or more processors 104 and memory 106 as being within the same block, the one or more processors 104 and memory 106 may actually comprise multiple processors and memories that may or may not be stored within the same physical housing. Accordingly, references to a processor or computer will be understood to include references to a collection of processors or computers or memories that may or may not operate in parallel.

Memory 106 may store information accessible by the one or more processors 104, including data 108, and instructions 110, that may be executed by the one or more processors 104. The memory 106 may be of any type capable of storing information accessible by the processor, including a computer-readable medium such as a hard-drive, memory card, ROM, RAM, DVD or other optical disks, as well as other write-capable and read-only memories. The system and method may include different combinations of the foregoing, whereby different portions of the data 108 and instructions 110 are stored on different types of media.

Data 108 may be retrieved, stored or modified by one or more processors 104 in accordance with the instructions 110. For instance, although the system and method are not limited by any particular data structure, the data 108 may be stored in computer registers, in a relational database as a table having a plurality of different fields and records, XML documents or flat files. The data 108 may also be formatted in any computer-readable format such as, but not limited to, binary values or Unicode. By further way of example only, image data may be stored as bitmaps including grids of pixels that are stored in accordance with formats that are compressed or uncompressed, lossless (e.g., BMP) or lossy (e.g., JPEG), and bitmap or vector- based (e.g., SVG), as well as computer instructions for drawing graphics. The data 108 may comprise any information sufficient to identify the relevant information, such as numbers, descriptive text, proprietary codes, references to data stored in other areas of the same memory or different memories (including other network locations) or information that is used by a function to calculate the relevant data.

The instructions 110 may be any set of instructions to be executed directly (such as machine code) or indirectly (such as scripts) by the one or more processors 104. For example, the instructions 110 may be stored as computer code on the computer-readable medium. In that regard, the terms "instructions" and "programs" may be used interchangeably herein. The instructions 110 may be stored in object code format for direct processing by the one or more processors 104, or in any other computer language including scripts or collections of independent source code modules that are interpreted on demand or compiled in advance. Functions, methods and routines of the instructions 110 are explained in more detail below.

The plurality of layers may include an input PIC, a first lens or photonic construct, one or more convolution PIC layers, a second lens or photonic construct, and an analyzer PIC. In some instances, a target PIC may be included at the one or more convolution layers. In some instances, the plurality of layers may be 2D layers. In this regard, the layers may be scalable in 2D, enabling a path to larger formats that can handle larger image files without the need to be decomposed into sub-images for processing

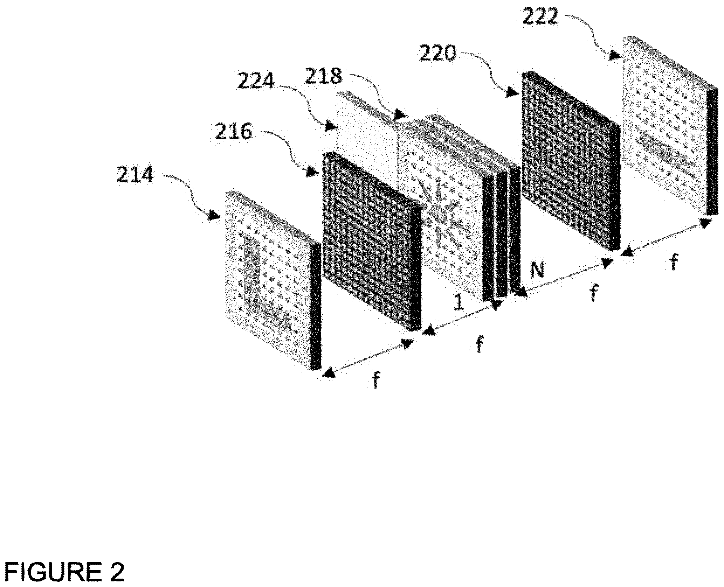

FIGURE 2 illustrates an example ONN configuration including a plurality of 2D layers. The layers of FIGURE 2 are input PIC 214, first lens or photonic construct 216, one or more convolution PIC layers 218, second lens or photonic construct 220, an analyzer PIC 222, and a target PIC 224. One or more of the plurality of layers may be separated by a distance f. For example and as illustrated, the input PIC 214 and first lens 216 are separated by a distance f; the first lens 216 and one or more convolution PIC layers 218 are separated by a distance f; the one or more convolution PIC layers 218 and the second lens 220 are separated by a distance f; and the second lens 220 and the analyzer PIC 222 are separated by a distance f. In such an example, a 4f ONN system architecture is depicted. The distance f may be a focal length associated with the components of the ONN, an effective Fourier transform length associated with the first and second lens of the ONN or a combination thereof.

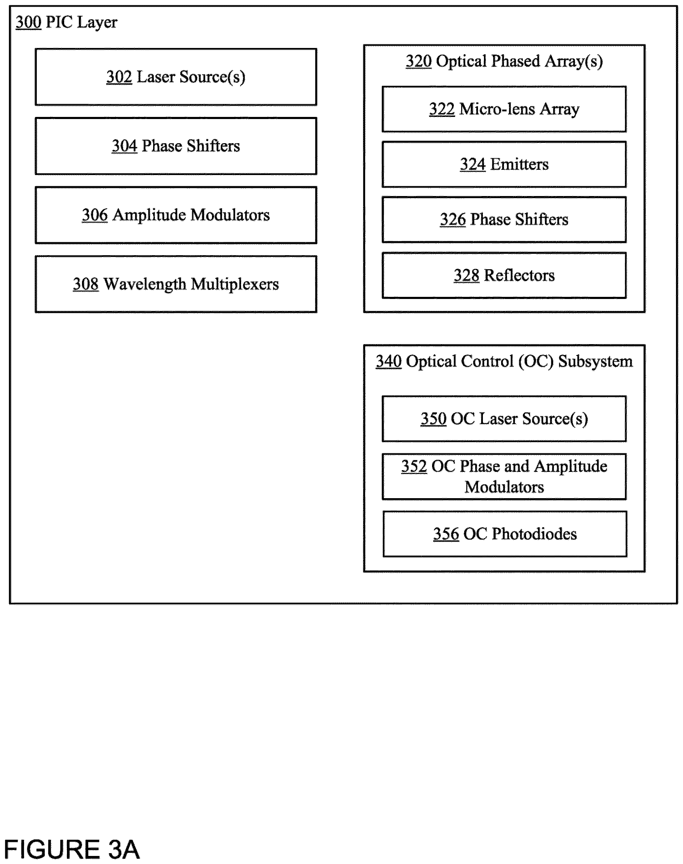

FIGURE 3A illustrates an example block diagram of a PIC layer 300 including one or more laser sources 302, a plurality of phase shifters 304, a plurality of amplitude modulators 306, a plurality of wavelength multiplexers 308, one or more OPAs 320, and an optical control (OC) subsystem 340. In some instances, the PIC layer 300 may additionally include a plurality of photodiodes for PDs. The plurality of PDs may be configured to measure one or more values such intensity and/or power.

The one or more OPAs 320 includes a micro-lens array 322, a plurality of emitters 324, a plurality of phase shifters 326, and a plurality of reflectors, partial reflectors, or retroreflector photonic constructs 328. The OC subsystem 340 includes one or more OC laser sources 350, a plurality of OC phase and amplitude modulators 352, and plurality of OC PDs 356. The components of the OC 340 may be used for phase and wavefront control. In this regard, the OC subsystem 340 may be configured to correct static and dynamic relative or absolute phase errors throughout the PIC layer 300 via the generation of one or more control wavelengths. The PIC layer 300 may also include other photonic and CMOS electronic components that may support signal processing therein. The signals can be light-based signals including, in some instances, optical beams including communications signals. The components of the PIC layer 300 may be connected via a plurality of waveguides or optical fibers. The one or more laser sources 302 and/or the one or more OC laser sources 350 may have a narrow linewidth specification (e.g., less than 500 kHz) and can serve as local oscillators for a coherent detector array architecture in the PIC layer 300.

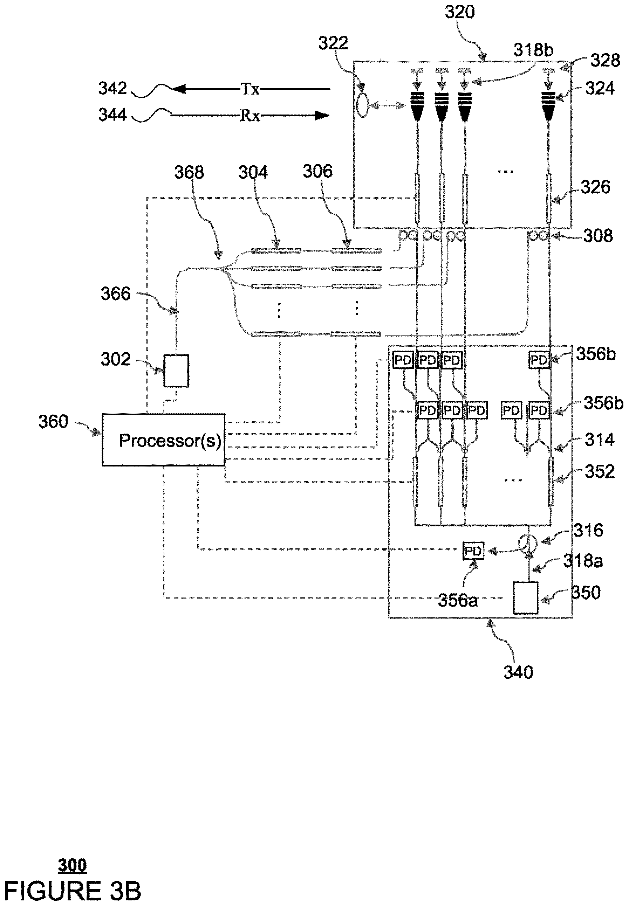

FIGURE 3B illustrates a corresponding example pictorial representation of PIC layer 300 including laser source 302, a plurality of phase shifters 304, a plurality of amplitude modulators 306, a plurality of wavelength multiplexers or demultiplexers 308, an OPA 320, an optical control (OC) subsystem 340, one or more processors 360, waveguide 366, and 1 × N splitter 368. For clarity and ease of understanding, additional waveguides and other features are not fully depicted. Arrows 342 and 344 represent the general direction of transmitted and received signals respectively as such signals leave and enter the PIC layer 300. In some instances, the PIC layer 300 may additionally include a plurality of photodiodes for PDs. The plurality of PDs may be configured to measure one or more values such intensity and/or power.

OPA 320 includes representations of a micro-lens array 322, a plurality of emitters 324, a plurality of phase shifters 326, and reflectors, partial reflectors, or retroreflector photonic constructs 328. For clarity and ease of understanding, additional waveguides and other features are not depicted. Arrows 342 and 344 represent the general direction of transmitted and received signals respectively as such signals leave and enter the PIC layer 300.

The micro-lens array 322 may include a plurality of convex micro-lenses that focus the Rx light onto respective ones of the plurality emitters positioned at the focal points of the micro-lens array 322. The micro-lens array 322 may be arranged in a grid pattern with a consistent pitch, or distance, between adjacent lenses. In other examples, the micro-lens array 322 may be in different arrangements having different numbers of rows and columns, different shapes, and/or different pitch (consistent or inconsistent) for different lenses.

Each micro-lens of the micro-lens array may be 1's, 10's, or 1000's of micrometers in diameter and/or height. In addition, each micro-lens of the micro-lens array 322 may be manufactured by molding, printing, or etching a lens directly into a wafer of the OPA 320 of PIC layer 300. Alternatively, the micro-lens array 322 may be molded, printed, or etched as a separately fabricated micro-lens array. In this example, the micro-lens array 322 may be a rectangular or square plate of glass or silica a few mm (e.g., 20 mm or more or less) in length and width and 0.76 mm or more or less thick. Integrating the micro-lens array within the OPA 320 may allow for the reduction of grating emitter size and an increase in the space between emitters. In this way, two-dimensional waveguide routing in the OPA may better fit in a single layer optical phased array. In other instances, rather than a physical micro-lens array, the function of the micro-lens array may be replicated using an array of diffractive optical elements (DOE).

Each micro-lens of the micro-lens array 322 may be associated with a respective emitter of the plurality of emitters 324. For example, each micro-lens may have an emitter from which Tx signals are received and to which Rx signals are focused. In this regard, for a given pitch (i.e., edge length of a micro-lens) the micro-lens focal length may be optimized for best transmit and receive coupling to the underlying emitters. This arrangement may thus increase the effective fill factor of the Rx light at the respective emitter, while also expanding the Tx light received at the micro-lenses from the respective emitter before the Tx light leaves the OPA 320.

The plurality of emitters 324 may be configured to convert emissions from waveguides to free space and vice versa. The emitters may also generate a specific phase and intensity profile to further increase the effective fill factor of the Rx light and improve the wavefront of the Tx light. The phase and intensity profile may be determined using inverse design or other techniques in a manner that accounts for how transmitted light will change as it propagates to and through the micro-lens array. The phase profile may be different from the flat profile of traditional grating emitters, and the intensity profile may be different from the gaussian intensity profile of traditional grating emitters. However, in some implementations, the emitters may be Gaussian field profile grating emitters.

The plurality of phase shifters 326 may allow for sensing and measuring Rx signals, controlling of the relative phase of Tx signals, and the altering of Tx signals to improve complex-value calculation fidelity from the between PIC layers. Each emitter may be associated with a respective phase shifter. The Rx signals received at the plurality of phase shifters 326 may be provided to receiver components including a sensor, the Tx signals from the plurality of phase shifters 326 may be provided to the respective emitters of the plurality of emitters 324. The architecture for the plurality of phase shifters 326 may include at least one layer of phase shifters having at least one phase shifter connected to an emitter of the plurality of emitters 324. In some examples, the phase shifter architecture may include a plurality of layers of phase shifters, where phase shifters in a first layer may be connected in series with one or more phase shifters in a second layer. In some instances, the plurality of emitters 324 may be a plurality of optical antennas.

The plurality of reflectors 328 may be configured to reflect signals transmitted from the plurality of emitters 324, such as one or more control wavelengths represented by arrow 318b, back to the plurality emitters 324. As shown in FIGURE 3B, the one or more reflectors 328 may be a plurality of reflectors, and may each correspond to an emitter of the plurality of emitters 324.

The one or more processors 360 may be configured to drive the OC subsystem 340 to generate one or more control wavelengths. The one or more control wavelengths may assist with phase and wavefront control. The OC subsystem 340 of FIGURE 3B includes a laser source 350, a plurality of OC phase and amplitude modulators 352, a plurality of OC PDs 356, one or more waveguide tap couplers 314, and a photonic circulator 316. The OC subsystem 340 and one or more control wavelengths thereof may be used as a reference to correct static and dynamic phase errors throughout the PIC layer 300 to control the relative or absolute phase of individual emitter pathways, and may allow for slightly different functionality across one or more of the plurality of layers 112 of the ONN 102. The one or more processors 360 may be configured to induce the OC laser source 350 to generate one or more control wavelengths. The one or more control wavelengths may be propagated along the waveguides of the PIC layer 300 as illustrated by arrows 318a and 318b.

The plurality of OC phase and amplitude modulators 352 may be included in one or more layers as illustrated in FIGURE 3B. The plurality of OC phase and amplitude modulators 352 may be operatively coupled to the plurality of OC PDs 356b. The plurality of OC PDs 356b may be coupled to each phase and amplitude modulator. FIGURE 3B further illustrates that individual PDs of the plurality of OC PDs 356b may be coupled to two or more phase and amplitude modulators of the plurality of OC phase and amplitude modulators 352 via a waveguide tap coupler, such as waveguide tap coupler 314. The plurality of OC PDs 356 may be configured to measure one or more values such intensity, power, and/or relative phase of the one or more control wavelengths. The measured values may be used in control and/or analysis of the one or more control wavelengths (e.g., as feedback) by the one or more processors 360. In this regard, the one or more processors 360 may use the measured values in control and/or the analysis of components of the OC subsystem 340 (e.g., the plurality of OC phase and amplitude modulators 352).

In some instances, differing PDs may be configured to measure values at different waveguides of a phase and amplitude modulator layer to determine a relative phase. For example, an arrangement may include one PD measuring the intensity/power of a waveguide A, one PD measuring the intensity/power of an adjacent waveguide B, and one PD measuring the relative phase between waveguide A and B by mixing the two signals on one PD. Such an arrangement may provide the basic building block for the PD measurement system of the plurality of PDs. In addition, the same or a similar arrangement may be repeated for adjacent waveguides (e.g., B and C, C and D, and so forth). The measured values, measured by the 3 example PDs for waveguides A-B, may be represented as A², B², and A² +B² +2ABcos***φ***_{AB} respectively. The three measured values may allow for the determination of ***φ***_{AB}, or the relative phase of the signals propagating via waveguides A and B. Absolute phase measurements are also possible by using a fraction of the control wavelength(s) as a local oscillator to coherently interfere with the retro-reflector control wavelengths which are propagated back and forth through the PIC at the plurality of PDs. This may require an additional plurality of phase and amplitude modulators in the local oscillator paths with associated feedback electronics to phase lock the two together.

As discussed above, the plurality of reflectors 328 of the OPA 320 may be configured to reflect signals transmitted from the plurality of emitters 324, such as one or more control wavelengths represented by arrow 318b, back to the plurality emitters 324. The one or more reflected back control wavelengths may propagate through the PIC layer 300 and be directed to OC PD 356a via circulator 316. The measured value of signal measured by OC PD 356a may be processed by the one or more processors 360. The measured values may be used in control and/or the analysis of components of the PIC layer 300.

The one or more processors 360 as illustrated are operatively connected to the plurality of OC phase and amplitude modulators 352, and the plurality of OC PDs 356. In this regard, the one or more processors 360 may be configured to drive (e.g., modify the phase and/or amplitude) of the plurality of OC phase and amplitude modulators 352. Additionally, the one or more processors 360 may be configured to utilize value(s) measured by the plurality of OC PDs 356 to drive the plurality of OC phase and amplitude modulators 352.

For example, measured values, as discussed above, from the plurality of OC PDs 356 may be used in the control (e.g., to drive) the plurality of OC phase and amplitude modulators 352. In some instances, the one or more processors 360 may use the measured values both to compensate for determined phase errors (e.g., at the plurality of OC phase and amplitude modulators 352) as well as to drive the plurality of phase shifters 326 of the OPA 320 to provide a particular phase to the plurality of emitters 324.

The one or more processors 360 may be any conventional processors, such as commercially available CPUs. For example, one or more processors 360 may be one or more complementary metal-oxide semiconductor (CMOS) processors. Alternatively, the one or more processors 360 may be a dedicated device such as an application specific integrated circuit (ASIC) or another hardware-based processor, such as a field programmable gate array (FPGA). The one or more processors 360 may be operatively connected to the plurality of phase shifters 326 of the OPA 320, the laser source 302, the plurality of phase shifters 304, the plurality of amplitude modulators 306, the laser source 350 of the OC subsystem 340, the OC phase and amplitude modulators 352, and the OC PDs 356.

The one or more processors 360 may be configured to induce the laser signal source 302 to generate signals (e.g., optical beams) to be propagated via the waveguide 366. The 1 × N splitter 368 may be configured to split signals from waveguide 366 such that the signals may be routed into the plurality of phase shifters 304 and the plurality of amplitude modulates 306. The one or more processors 360 may be configured to drive the plurality of phase shifters 304 and the plurality of amplitude modulators 306 to allow for control of one or more characteristics of signals propagated therethrough. In some instances, the one or more processors 360 may be the same or included in one or more processors 104 of the ONN 102. Additionally or alternatively the one or more processors 360 may include at least one processor specific to the PIC layer 300. Additionally or alternatively, the one or more processors 360 of the PIC layer 300 may include at least one processor specific to the OC subsystem 340.

The plurality of multiplexers 308 may be configured to receive signals from the plurality of phase shifters 304 and the plurality of amplitude modulators 306 and one or more control wavelengths from the OC subsystem 340. The plurality of multiplexers 308 are further configured to direct such signals and one or more control wavelengths to the OPA 320. The plurality of multiplexers 308 may be additionally configured to direct signals received at the plurality of emitters 324 to one or more components configured to assist with reception and directed reflected back one or more control wavelengths to the OC subsystem 340. In some instances, one or more multiplexers or demultiplexers 308 may route signals (e.g., reflected back control wavelength(s) 318b and received signals 344) to one or more of the plurality of OC PDs 356 for detection, electronic amplification and buffering, and/or analog to digital conversion.

In some instances, to maximize bandwidth, waveguide pathlengths may be matched from the 1 × N splitter 368 to a plurality of emitters 324 of the OPA 320. For lower bandwidth operations and a simpler layout, the pathlengths may be set to be approximately a multiple of 2 times an effective index of refraction times a wavelength, where the total path mismatch would be inversely proportional to the reduced bandwidth capability. In some instances, the physical distance between the tap coupler 314 and the one or more multiplexers 308 may be a length (on the order of 100 ums) such that fabrication tolerances and thermal gradient may not cause any relative phase errors between the propagating signals generated at the laser source 302 and the one or more control wavelengths generated at laser source 350. In this regard the dispersion between the signals and one or more control wavelengths may be small enough so that relative phase errors are relatively small or a small offset or other phase shifter control value (offset-locking) can be applied by one or more phase shifters of the PIC layer 300 to compensate for any differences.

The input PIC 214 may be configured in the same or similar manner as the PIC layer 300 of FIGURES 3A-3B. The input PIC 214 may include additional components that may support digitization of a test pattern and a test pattern input preparation. In this regard, when the PIC layer 300 is configured as an input PIC 214, the one or more processors 360 may be further configured to encode the test pattern or components thereof onto a signal to be transmitted from via OPA 320. The test pattern may be an image to be analyzed by the ONN, such as a test image. In such an instance where the test pattern is a test image, the one or more processors 360 may be configured to digitize the test pattern into, for example, matrix form. Alternatively, the test pattern may be received in digitized form, such as, for example, matrix.

The encoded components of the test pattern may be different features thereof. In one example, different components may include different color spectra (e.g., red, green, blue for visible light). Encoding components of the test pattern may include encoding multiple wavelengths onto a signal. For example, a first encoded wavelength may include the red light component of the test pattern, a second encoded wavelength may include the green light component of the test pattern, and a third encoded wavelength may include the blue light component of the test pattern. The components of the test pattern may be encoded onto an optical signal generated at the laser source 302 via the plurality of phase shifters 304 and the plurality of amplitude modulators 306, processed using the one or more control wavelengths of the OC subsystem 340 and transmitted from the OPA 320 as discussed above with respect to FIGURES 3A-3B.

In some instances, a single component may be encoded onto a signal. The input PIC 214 may be configured to transmit the signal including the test pattern via the OPA 320. In addition to processing colors of light simultaneously, in general the ONN can concurrently process multiple forms of signals that could be decomposed into a separable basis set; for example, frequency based signals may include audio, electronic, radio frequency, x-ray, magnetic resonance, etc.

The one or more convolution PIC layers 218 may be configured in the same or similar manner as the PIC layer 300 of FIGURES 3A-3B. The one or more convolution PIC layers 218 may include additional components that may support signal processing and/or signal filtering (e.g., matrix multiplication of the test pattern and a target pattern mask). In this regard, when the PIC layer 300 is configured as one or more convolution PIC layers 218 may be configured to receive at OPA 320, signals including the one or more components of the test pattern from the input PIC 214. The one or more processors 360 may be configured to apply a target pattern as a filter or mask to a signal including the test pattern from the input PIC 214. The one or more target patterns may include example images to be compared to or correlated to the test pattern. In some instances, the one or more target patterns may be in the Fourier Transform (FT) domain. In some instances, the one or more target patterns may include training data.

The filtering or mask application may be achieved via one or more convolution operations. For example, if the target pattern includes an image of the letter A, the test pattern signal may be filtered using the target pattern such that only instances or peaks of the test pattern corresponding to the letter A may remain. In other words, instances of overlap between an expression of the target pattern and the test pattern may survive the filtering. The one or more processors, may be further configured to transmit the filtered signal including the test pattern by driving the one or more phase shifters.

In some instances, the one or more convolution PIC layers 218 may be a plurality of convolution PIC layers. Each of the plurality of convolution PIC layers may be configured to filter or apply a component of the target pattern to a corresponding component of the test pattern. Like the components of the test pattern, in one example, the different components of the target pattern may include different color spectra (e.g., red, green, blue for visible light). In this regard, each convolution PIC layer may be configured to apply a filter corresponding to a component of the target pattern to the signal including the test pattern. Additionally or alternatively, the target pattern may be a plurality of target patterns which may each be applied to the test pattern or components thereof in a differing layer of the plurality of convolution PIC layers.

In such instances, the filtered signal from the one or more convolution PIC layers 218 may include multiple wavelengths each corresponding to the filtering performed in each convolution PIC layer. In some instances, each layer may apply its respective filter in parallel.

In some instances, the filter or mask of the one or more convolution PIC layers may be dynamically changed through use of the plurality of phase shifters 304 and plurality of amplitude modulators 306. Such dynamic change enables high speed comparison of the test pattern against the target pattern.

Following the filtering of the signal including the test pattern, the one or more convolution layers 218 may be configured to transmit the filtered signal via OPA 320 to the analyzer PIC 222. In some instances, the one or more convolution PIC layers 218 may include separate transmit and receive OPAs instead of a bidirectional OPA, such as OPA 320. In this regard, the one or more convolution PIC layers 218 may be configured to receive signals from the input PIC 214 at a receive OPA and transmit filtered signals using a transmit OPA to the analyzer PIC 222.

In some instances, the one or more convolution PIC layers 218 may be configured encode components of the target pattern on a signal in in the same manner as discussed above with respect to the encoding of the test pattern in the input PIC 214 Alternatively, in some instances, the target pattern may be received as a signal from a target PIC 224. The target PIC 224 may be configured in the same or similar manner as the PIC layer 300 of FIGURES 3A-3B. The target PIC 224 may include additional components that may support digitization of a target pattern for preparation as a mask in the one or more convolution PIC layers 218. When the PIC layer 300 is configured as a target PIC 224, the one or more processors 360 may be further configured to encode the target pattern or components thereof pattern onto a signal to be transmitted from via OPA 320. In an instance where the target pattern is a target image, the one or more processors 360 may be configured to digitize the target pattern into, for example, matrix form. Alternatively, the target pattern may be received in digitized form, such as, for example, matrix. The components of the target pattern may be encoded onto an optical signal generated at the laser source 302 via the plurality of phase shifters 304 and the plurality of amplitude modulators 306, processed using the one or more control wavelengths of the OC subsystem 340 and transmitted from the OPA 320 as discussed above with respect to FIGURES 3A-3B. The transmitted signal may then be received by the one or more convolution PIC layers 218.

In some instances, a single component may be encoded onto a signal. The target PIC 224 may be configured to transmit the signal including the test pattern via the OPA 320. In addition to processing colors of light simultaneously, in general the ONN can concurrently process multiple forms of signals that could be decomposed into a separable basis set; for example, frequency based signals may include audio, electronic, radio frequency, x-ray, magnetic resonance, etc.

In some instances, the target PIC 224 may not include OPA 320. In this regard, the target PIC 224 may be connected to the one or more convolution PIC layers 218 via a plurality of waveguides, plurality of optical fibers. In some instances, the target PIC 224 may include a lens or other components that may transform the encoded signal into the Fourier domain for filtering. The lens may be configured in the same manner as the first lens 216 and second lens 220, discussed in further detail below.

The analyzer PIC 222 may be configured in the same or similar manner as the PIC layer 300 of FIGURES 3A-3B. The analyzer PIC 222 may include additional components that may support direct or coherent detection of filtered signals from the one or more convolution PIC layers 218. The one or more processors 360 may be configured to compare a filtered signal received from the one or more convolution PIC layers 218 to a threshold. The threshold may be a confidence level threshold. In some instances, the threshold may be a plurality of thresholds, where each threshold corresponds to a different component of the test pattern. In this regard, the filtered signal being equal to or above the threshold may be indicative of the target pattern, or components thereof, being present in the test pattern. Additionally, the filtered signal being below the threshold may be indicative of the target pattern, or components thereof, not being present in the test pattern. The results of the comparison may be in the form of a correlation matrix or include components of a correlation matrix.

In some instances, the one or more processors 360 may be further configured to output the results of the comparison of the filtered beam to the threshold. The output results may be saved in the memory 106 of the ONN 102 and/or in an external device. In one instance, the results of the comparison may include if the test pattern contains one or more components or parameters of the target pattern (e.g., a determination of a class of the test pattern). In another instance, the results of the comparison may include if the target pattern is contained in the test pattern (e.g., recognition of an image in the test pattern).

Additionally, the one or more processors 360 may be further configured to induce the ONN 102 to repeat the filtering process until the threshold is met and/or until each component of the test pattern is filtered by a target pattern. In some instances, the one or more processors 360 may be the same as the one or more processors 104 of the ONN 102 and may include a central processing unit.

The first lens 216 and second lens 220 may be configured to perform a FT and inverse Fourier Transform (IFT), respectively, on signals passing therethrough. In this regard, the filtering conducted in the one or more convolution PIC layers 218 may be conducted in the FT domain. In some instances, the first lens 216 and second lens 220 may be configured to perform a Fast Fourier Transform (FFT) and inverse Fast Fourier Transform (IFFT), respectively, on optical beams passing therethrough.

In some instances, the first lens 216 and second lens 220 may be meta-lenses. In one example, the first and second lenses may each be formed as an OPA with Tx and Rx capabilities and including a silicon meta-lens. Such an OPA may include the same or similar components as discussed above with respect to FIGURES 3A-B. In such an example, the OPA may be integrated on a PIC silicon wafer carrier.

In another example, the first lens 216 and second lens 220 may be formed as stacked interlayered multiple planar diffractive cell layers. In a further example, the first and second lenses may each be formed as a glass surface with a semiconductor layer thereon. The semiconductor layer may be formed in a manner that allows for the FFT and IFFT respectively to be performed. In a further example, the first and second lenses may be included in a micro lens array. In this regard, the lenses of the micro lens array of the input PIC 214, the one or more convolution PIC layers 218, the analyzer PIC 222, or any combination thereof may be configured to perform FT, IFT, etc. on signals. The first lens 216 and second lens 220 can be a bulk optic, micro-lens array, diffractive optic, micro-printed lens array or meta-lens or any combination thereof.

### EXAMPLE METHODS

As discussed above, the ONN implemented using PICs, may be used in a method of analyzing an image. The analysis of images may be directed towards different ends. In one instance, the ONN may classify images (e.g. perform image classification tasks). In such an instance, a test pattern may be analyzed to determine the class of images to which it belongs. In such an instance, the results of the analysis may include if the test pattern contains one or more components or parameters of the target pattern. For example, for a test image including a flower, the ONN may be configured to determine the type of flower (e.g., iris) in an image. In some examples, the ONN may be further configured to determine a sub-class or species of flow (e.g., iris setosa, iris versicolor, or iris virginica).

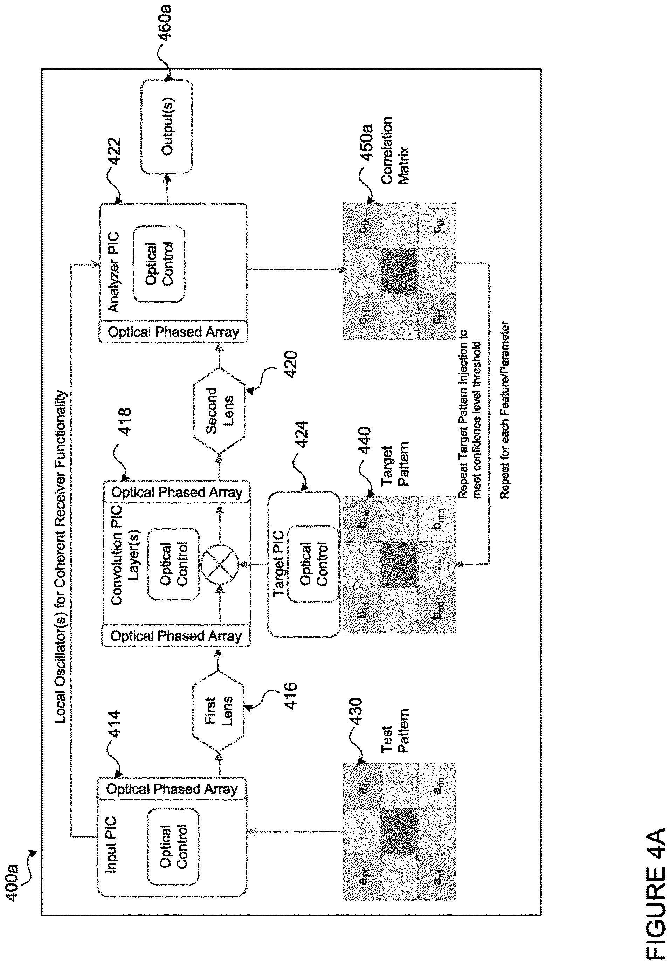

FIGURE 4A illustrates an example pictorial method flow of an ONN 400a configured to classify images. In this regard, the input PIC may be configured to receive a test pattern 430. The input PIC may encode the test pattern on a signal and transmit the signal as discussed above. The signal may be transformed into the FT domain via first lens 416 and received by the one or more convolution PIC layers 418. As discussed above, the one or more convolution PIC layers 418 may apply a filter or mask based on one or more target patterns 440 encoded on a signal by and received from target PIC 424. A filtered signal may be transmitted by the one or more convolution PIC layers 418 through the second lens 420. The filtered signal may be transformed out of the FT domain and be received by analyzer PIC 422. The analyzer PIC 422 may be configured to compare the filtered signal to one or more thresholds as discussed above. The results of the comparison may be a correlation matrix 450a. The filtering by the one or more convolution PIC layers 418 may be repeated until the threshold is met. Additionally, the filtering may be repeated for each parameter pertaining to a class of images. Then, analyzer PIC 422 may output the results of the comparison as outputs 460a. The results of the comparison may be in the form of a correlation matrix or include components of correlation matrix 450a.

In other instances, the ONN may recognize certain patterns or other information in images and/or the image itself (e.g., perform image recognition tasks). In such an instance, the results of the analysis may include if the target pattern is contained in the test pattern. By way of example, the ONN may recognize text. In such an example, the ONN may determine if a specific number, letter, or other character is present in a test pattern.

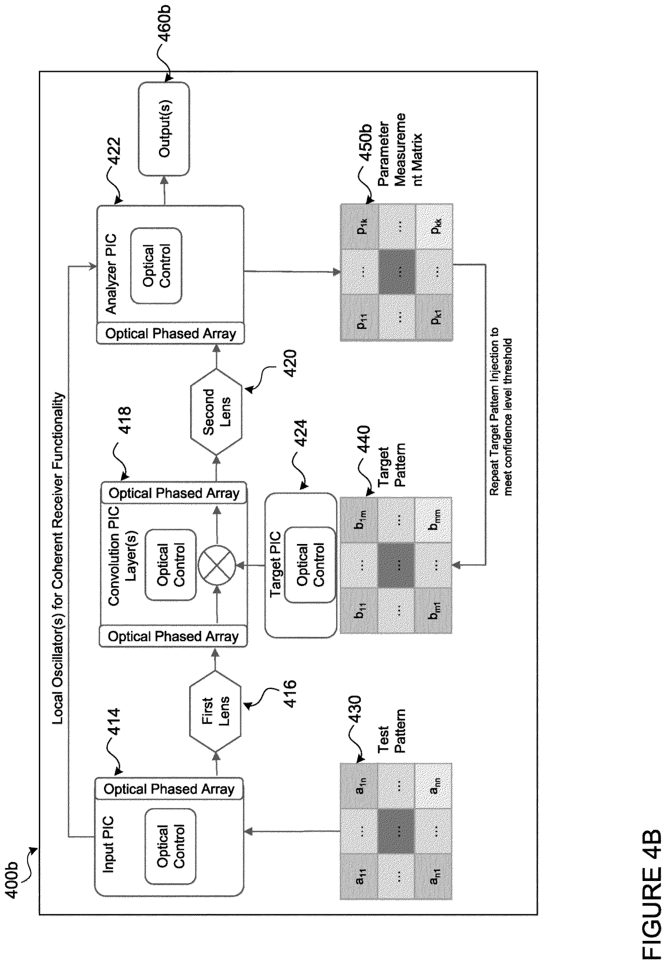

FIGURE 4B illustrates an example pictorial method flow of an ONN 400b configured to perform image recognition. In this regard, the input PIC may be configured to receive a test pattern 430. The input PIC may encode the test pattern on a signal and transmit the signal as discussed above. The signal may be transformed into the FT domain via first lens 416 and received by the one or more convolution PIC layers 418. As discussed above, the one or more convolution PIC layers 418 may apply a filter or mask based on one or more target patterns 440 encoded on a signal by and received from target PIC 424. A filtered signal may be transmitted by the one or more convolution PIC layers 418 through the second lens 420. The filtered signal may be transformed out of the FT domain and be received by analyzer PIC 422. The analyzer PIC 422 may be configured to compare the filtered signal to one or more thresholds as discussed above. The results of the comparison may be a correlation matrix 450b. The filtering by the one or more convolution PIC layers 418 may be repeated until the threshold is met for the image to be recognized. Then, analyzer PIC 422 may output the results of the comparison as outputs 460b. The results of the comparison may be in the form of a correlation matrix or include components of correlation matrix 450b.

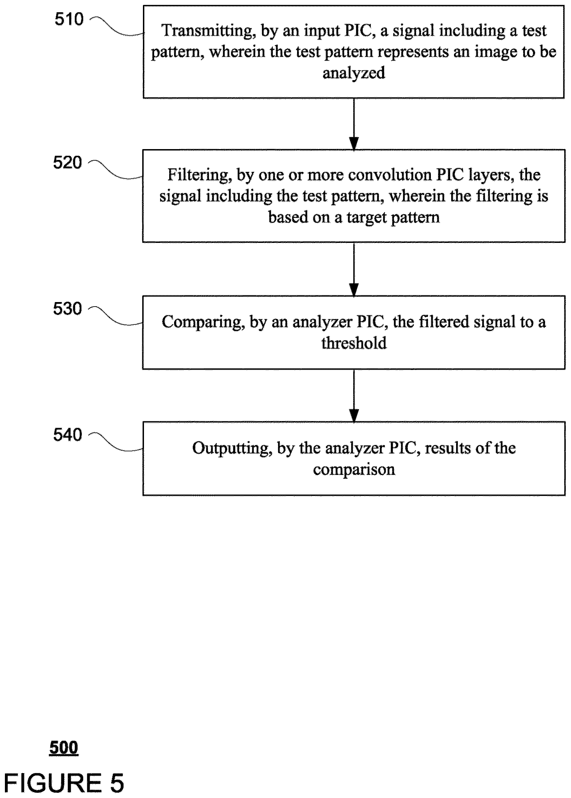

FIGURE 5 illustrates an example method 500 of analyzing an image using an ONN. At block 510, the method includes transmitting, by an input PIC, a signal including a test pattern, wherein the test pattern represents an image to be analyzed. In this regard, input PIC 214, 414 may receive and encode components of the test pattern 430 on a signal (e.g., optical beam) as discussed above. The input PIC 214, 414 may then transmit the optical beam including the components of the test pattern 430 to the one or more convolution PIC layers 218, 418.

At block 520, the method further includes filtering, by one or more convolution PIC layers, the signal beam including the test pattern, wherein the filtering is based on a target pattern. The one or more convolution PIC layers 218, 418 may filter the signal including the test pattern 430 received from the input PIC 214, 418 as discussed above. In this regard, the one or more processors 104, 360 may apply the target pattern 440 as a filter or mask to the signal including the test pattern 430 and transmit the filtered signal (e.g., optical beam) to the analyzer PIC 222, 422. In some instances, components of the signal may be filtered sequentially or in parallel using multiple layers of the one or more convolution PIC layers 218, 418 as discussed above. In such an instance, components of the target pattern may be used to filter the signal sequentially or in parallel. In some instances, the filtering may include receiving a signal from the target PIC 224, 424 including the target pattern or components thereof as discussed above.

At block 530, the method further includes comparing, by an analyzer PIC, the filtered signal to a threshold. As discussed above, the analyzer PIC 222, 422 may be configured to compare a filtered signal (e.g., optical beam) received from the one or more convolution PIC layers 218, 418 to a threshold. In this regard, the comparison may relate the signal to individual components or parameters of the test pattern 440. In some instances, the threshold may be a confidence level threshold. In some instances, the threshold may be a plurality of thresholds, where each threshold corresponds to a different component of the test pattern 440. In some instances, the threshold may be a plurality of thresholds, where each threshold corresponds to a different component of the test pattern 430. In this regard, the filtered signal being equal to or above the threshold may be indicative of the target pattern 440, or components thereof, being present in the test pattern 430. Additionally, the filtered signal being below the threshold may be indicative of the target pattern 440, or components thereof, not being present in the test pattern 430. In some instances, a threshold utilized during image recognition tasks may be greater than a threshold utilized during image classification tasks. The results of the comparison may be in the form of a correlation matrix or include components of a correlation matrix 450.

At block 540, the method further includes outputting, by the analyzer PIC, results of the comparison. In this regard, the one or more processors 104,360 or at least one processor thereof operatively connected to the analyzer PIC 222, 422 may be configured to output the results of the comparison of the filtered signal to the threshold. In some instances, the results may be the results of image classification tasks. In this regard, the results or outputs 460a may include a determination of the class of images to which the test pattern belongs (e.g., if one or more components or parameters of the target pattern are included in the test pattern). In some instances, the results or outputs 460b may be the results of image recognition tasks. In this regard, the results may include recognizing certain patterns or other information in images and/or the image itself (e.g., if the target pattern is contained in the test pattern).

The output results may be saved in the memory 106 of the ONN 102 and/or in an external device. In one instance, the results of the comparison may include if the test pattern 430 contains a number of components or parameters of the target pattern 440. In another instance, the results of the comparison may include if the target pattern 440 is contained in the test pattern 430.

In some instances, the method may further include performing, at a first lens, a FT on the signal including the test pattern from the input PIC. Additionally, the method may further include performing, at a second lens, an IFT on the filtered signal from the one or more convolution PIC layers. In this regard, the first lens 216, 416 may perform a FT (e.g., FFT) on the signal transmitted from the input PIC 214, 414 and received at the one or more convolution PIC layers 218, 418. Additionally, the second lens 220, 420 may perform a IFT (e.g., IFFT) on a filtered signal transmitted from the one or more convolution PIC layers 218 and received at the analyzer PIC 222, 422. As such, the filtering conducted in the one or more convolution PIC layers 218, 418 may be conducted in the FT domain.

In some instances, the method may further include filtering, by the one or more convolution PIC layers, the signal including the test pattern, wherein the filtering is based on a second target pattern. In this regard, one or more processors 104, 360 or at least one processors thereof operatively connected to the analyzer PIC 222, 422 may be configured to induce the ONN 102 to repeat the filtering process if the threshold is not met. As such the filtering process may be repeated using additional test patterns until the threshold is met. Additionally or alternatively, the one or more processors 104, 360 of the ONN 102 may be configured to induce the ONN 102 to repeat the filtering process until each component of the test pattern is filtered by a target pattern.

The features and methodology described herein may provide a scalable ONN capable of processing large amounts of data and perform complex operations without the hindrances of electronic counterparts. In this regard, the ONN may utilize the scalability of the OPA to compute complex matrix-vector multiplication, have the advantages of ultra-high bandwidth, high calculation speed, high parallelism over electronic counterparts, and ultralow power consumption. Moreover, The PIC approach configured with OPAs leverages advances in complementary metal oxide semiconductor (CMOS) fabrication technologies to replace bulk centimeter sized ONN components with integrated micron level semiconductor photonics constructs. These CMOS compatible photonics can be directly integrated with CMOS electronics to provide complete ONN chips akin to electronic central processing unit (CPU) and graphics processing unit (GPU). This also allows ONN chip manufacture at the volume and cost scale required for next generation wide-spread speech recognition, image classification, computer vision and natural language processing applications. Additionally, extra dimensions enable system improvements such as wavelength division and spatial mode multiplexing that provides multi-thread processing with almost no extra computing overhead, leading to ultralow energy consumption that can drive system key performance metrics.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method of analyzing an image using an optical neural network (ONN), the method comprising:
transmitting, by an input photonic integrated circuits (PIC), a signal including a test pattern, wherein the test pattern represents an image to be analyzed;
filtering, by one or more convolution PIC layers, the signal including the test pattern, wherein the filtering is based on a target pattern;
comparing, by an analyzer PIC, the filtered signal to a threshold; and
outputting, by the analyzer PIC, results of the comparison.

2. The method of claim 1, further comprising:
performing, at a first lens, a Fourier Transform (FT) on the signal including the test pattern from the input PIC; and
performing, at a second lens, an inverse Fourier Transform (IFT) on the filtered signal from the one or more convolution PIC layers.

3. The method of claim 1 or claim 2, wherein outputting, by the analyzer PIC, the results of the comparison include saving the results in a memory of the ONN.

4. The method of any preceding claim, further comprising:
receiving, at the input PIC, the test pattern; and
encoding, at the input PIC, the test pattern on the signal, and optionally wherein encoding, at the input PIC, the test pattern on the signal includes encoding components of the test pattern of the signal.

5. The method of any preceding claim, further comprising:
receiving, at one or more convolution PIC layers, the signal including the test pattern; and
receiving, at the one or more convolution PIC layers, a signal including the target pattern from a target PIC, and optionally wherein:
receiving, at the one or more convolution PIC layers, the signal including the target pattern includes receiving a signal including a plurality of components of the target pattern, the plurality of components of the target pattern including a first component and a second component; and
filtering, by the one or more convolution PIC layers, the signal including the test pattern includes filtering the signal including the test pattern based on the first component at a first layer of the one or more convolution PIC layers and filtering the signal including the test pattern based on the second component at a second layer of the one or more convolution PIC layers.

6. The method of claim 5, wherein:
filtering the signal including the test pattern based on the first component at the first layer of the one or more convolution PIC layers and filtering the signal including the test pattern based on the second component at the second layer of the one or more convolution PIC layers are performed in parallel, or
filtering the signal including the test pattern based on the first component at the first layer of the one or more convolution PIC layers and filtering the signal including the test pattern based on the second component at the second layer of the one or more convolution PIC layers are performed sequentially.

7. The method of any preceding claim, wherein the threshold is a plurality of thresholds and each of the plurality of thresholds corresponds to a different component of the test pattern.

8. The method of any of claims 1 to 6, wherein the threshold is a confidence level threshold.

9. The method of any preceding claim, wherein the results of the comparison include a determination of a class of the test pattern or recognition of an image in the test pattern.

10. An optical neural network (ONN) formed as a plurality of layers, the ONN comprising:
a first layer including an input photonic integrated circuit (PIC), the input PIC configured to transmit signals including one or more test patterns, wherein each test pattern represents an image to be analyzed;
a second layer including a first lens, the first lens configured to perform a Fourier Transform (FT) on signals passing therethrough;
a third layer including one or more convolution PIC layers, the one or more convolution PIC layers configured to filter received signals including one or more test patterns based on one or more target patterns;
a fourth layer including a second lens, the second lens configured to perform inverse Fourier Transform (IFT) on signals passing therethrough; and
a fifth layer including an analyzer PIC, the analyzer PIC configured to compare filtered signals from the third layer to one or more thresholds.

11. The ONN of claim 10, wherein the FT is Fast Fourier Transform (FFT) and the IFT is an inverse Fast Fourier Transform (IFFT).

12. The ONN of claim 10 or claim 11, wherein the first lens and the second lens are meta-lenses, or wherein the first lens and the second lens are stacked interlayered multiple planar diffractive cell layers.

13. The ONN of any of claims 10 to 12, wherein the comparison results in a determination of a class of a test pattern or recognition of an image in the test pattern.

14. An optical neural network (ONN) formed as a plurality of layers, the ONN comprising:
a first layer including an input photonic integrated circuit (PIC), the input PIC configured to transmit signals beam including one or more test patterns, wherein each test pattern represents an image to be analyzed;
a second layer including one or more convolution PIC layers, the one or more convolution PIC layers configured to filter received signals including one or more test patterns based on one or more target patterns; and
a third layer including an analyzer PIC, the analyzer PIC configured to compare filtered optical beams from the second layer to a threshold.

15. The ONN of claim 14, wherein:
a first lens configured to perform a Fourier Transform (FT) on an optical beam passing therethrough is included in one of: i) the first layer, ii) the second layer, or ii) the third layer, and/or
the second lens configured to perform inverse Fourier Transform (IFT) on an optical beam passing therethrough is included in one of: i) the first layer, ii) the second layer, or ii) the third layer.
